# DEMANDE DE BREVET EUROPEEN

(11) **EP 1 610 257 A1**
(43) Date de publication de la demande: **28.12.2005**
(21) Numéro de dépôt: 05105573.9
(22) Date de dépôt: 22.06.2005
(51) Int. Cl.: G06K 7/00, G06K 19/07, G01S 13/75

(54) **Adaptation d'impédance d'un lecteur de transpondeur électromagnétique**

(30) Priorité: 23.06.2004 FR 0451316
(71) Demandeur: ST MICROELECTRONICS S.A., 92120 Montrouge (FR)
(72) Inventeur: ENGUENT, Jean-Pierre, 13119, SAINT SAVOURNIN (FR)
(74) Mandataire: de Beaumont, Michel

(57) **Abrégé**

L'invention concerne une borne de génération d'un champ électromagnétique, comprenant un circuit oscillant (C1, L1, R1) propre à recevoir une tension d'excitation alternative haute fréquence par l'intermédiaire d'un amplificateur (6) et d'un coupleur directif (4), le circuit oscillant comportant au moins un élément (20) de capacité variable, et un moyen (21) pour modifier la valeur de cette capacité en fonction de l'amplitude d'un signal extrait du coupleur (4).

## Description

### Domaine de l'invention

La présente invention concerne les systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture et/ou d'écriture. L'invention concerne, plus particulièrement, les bornes de lecture-écriture de transpondeurs dépourvus d'alimentation autonome qui extraient l'alimentation nécessaire aux circuits électroniques qu'ils comportent d'un champ haute fréquence rayonné par une antenne de la borne.

### Exposé de l'art antérieur

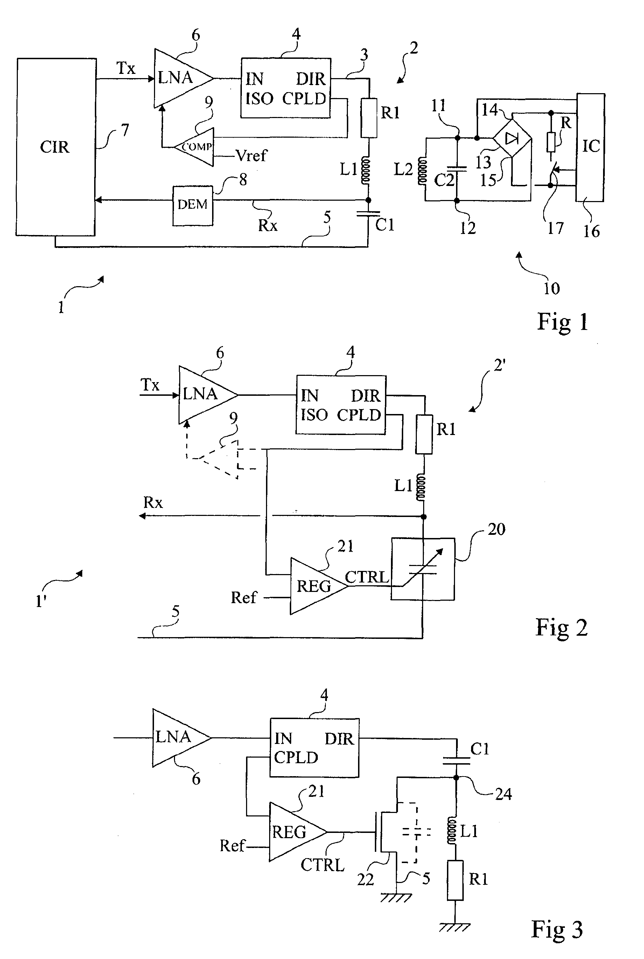

La figure 1 représente, de façon très schématique et sous forme de blocs, une borne 1 de lecture de transpondeurs électromagnétiques et un transpondeur 10 destiné à communiquer avec une telle borne.

Côté borne de lecture, on trouve généralement un circuit oscillant série 2 constitué d'une inductance L1 formant antenne, en série avec un condensateur C1 (et généralement une résistance R1), entre une borne 3 de sortie d'un coupleur d'antenne 4 et une borne de référence 5, généralement la masse. Le coupleur 4 reçoit d'un amplificateur 6 (LNA) un signal Tx d'excitation fourni par un modulateur (non représenté) de signaux à transmettre à destination du transpondeur 10. Ce modulateur fait partie de circuits 7 (CIR) représentés schématiquement sous forme d'un bloc comprenant des circuits de commande du circuit oscillant et d'exploitation de données reçues du transpondeur (entre autres, un modulateur et un microprocesseur pour traiter des signaux de commande et de données). En l'absence de données à transmettre, le modulateur du circuit 7 transmet une porteuse de téléalimentation (généralement à 13,56 MHz) à destination du transpondeur 10. Le point de connexion du condensateur C1 et de l'inductance constitue, dans l'exemple représenté à la figure 1, une borne de prélèvement d'un signal Rx de données, reçues d'un transpondeur 10, à destination d'un démodulateur 8 (DEM). Une sortie du démodulateur 8 communique les données reçues du transpondeur aux circuits numériques 7 (généralement le microprocesseur par l'intermédiaire d'un décodeur).

Afin d'adapter la puissance d'émission de la borne, on utilise généralement le coupleur 4 pour prélever une information proportionnelle au signal fourni par l'amplificateur 6 à destination d'un comparateur 9 (COMP) contrôlant le gain de l'amplificateur 6. Ce comparateur compare, par exemple, la tension prélevée sur une borne dite CPLD du coupleur 4 par rapport à une tension de référence Vref prédéterminée. De façon connue, un coupleur 4 qu'il soit à lignes couplées ou à éléments localisés comporte deux bornes IN et DIR entre lesquelles circule le signal principal, et une borne CPLD fournissant une information proportionnelle. Généralement une quatrième borne ISO est laissée en l'air ou connectée, par une résistance ou d'un condensateur, à la masse.

Côté transpondeur 10, une inductance L2 en parallèle avec un condensateur C2 forme un circuit oscillant parallèle (appelé circuit résonant) destiné à capter le champ magnétique engendré par le circuit oscillant série de la borne 1. Les bornes 11 et 12 du circuit résonant sont reliées à deux bornes d'entrée alternative d'un élément 13 de redressement (mono ou double alternance) dont des bornes 14 et 15 de sortie redressée fournissent une tension d'alimentation à des circuits 16 (IC) du transpondeur, généralement par l'intermédiaire d'un condensateur non représenté destiné à stocker et à lisser la tension redressée par le pont 13. Les circuits électroniques 16 du transpondeur comprennent généralement essentiellement un micro-contrôleur et un démodulateur des signaux éventuellement reçus de la borne 11. Le circuit 16 reçoit un signal directement prélevé aux bornes du circuit oscillant (par exemple sur la borne 11) pour reconstituer un signal d'horloge à partir de la porteuse de téléalimentation fournie par la borne. Le plus souvent, tous les circuits électroniques du transpondeur 10 sont intégrés dans une même puce, elle-même encartée dans une carte à puce.

La transmission des données du transpondeur 10 vers la borne 1 s'effectue sous commande d'un étage de modulation (rétromodulation) du circuit résonnant L2-C2. Cet étage de modulation est généralement constitué d'un interrupteur électronique 17 (par exemple, un transistor MOS) et d'une résistance R (ou d'un condensateur) en série entre les bornes 14 et 15 (ou entre les bornes 11 et 12). L'interrupteur 17 est commandé à une fréquence (par exemple, 847,5 kHz) dite sous-porteuse, nettement inférieure à la fréquence du signal d'excitation du circuit oscillant de la borne 1. Lorsque l'interrupteur 17 est fermé, le circuit oscillant du transpondeur est soumis à un amortissement supplémentaire par rapport à la charge constituée du circuit 16, de sorte que le transpondeur prélève une quantité d'énergie plus importante du champ magnétique haute fréquence. Côté borne 1, l'amplificateur 6 maintient constante l'amplitude du signal d'excitation haute fréquence grâce à l'asservissement effectué par le coupleur 4 et le comparateur 9. Par conséquent, la variation d'énergie du transpondeur se traduit par une variation d'amplitude et de phase du courant dans l'antenne L1. Cette variation est détectée par le démodulateur 8 de la borne 1, généralement un démodulateur d'amplitude.

Les circuits résonnants (L2-C2) du transpondeur 10 et oscillant (R1-L1-C1) de la borne 1 sont généralement accordés sur une même fréquence qui correspond le plus souvent à la fréquence de la porteuse de téléalimentation.

L'impédance du circuit oscillant de la borne 1 est généralement adaptée à la sortie du coupleur 4, celui-ci ayant par ailleurs une impédance d'entrée adaptée à la sortie de l'amplificateur 6. Pour que l'impédance du circuit oscillant soit adaptée à la sortie du coupleur 4, il faut que les parties imaginaires des impédances respectives de l'inductance L1 et du condensateur C1 s'annulent mutuellement à la fréquence d'accord, et que la résistance R1 (majorée de la résistance série de l'inductance L1) ait pour valeur celle de l'impédance de sortie du coupleur (généralement 50 ohms).

Un problème des bornes de lecture-écriture classiques est qu'en cas de désadaptation de l'impédance de l'antenne du circuit oscillant, le signal reçu par le démodulateur s'en trouve perturbé.

Or, tout élément entrant dans le champ magnétique de la borne est susceptible de provoquer un élément réactif supplémentaire dans ce champ et de modifier alors l'impédance du circuit oscillant.

Par ailleurs, l'accord de la fréquence de résonance à la fréquence de la porteuse est effectué manuellement au moyen d'un condensateur C1 variable, une fois la borne fabriquée. Ce besoin d'ajustement du condensateur C1 est notamment lié aux tolérances de fabrication des éléments capacitifs et inductifs. Généralement, le condensateur C1 a une tolérance de valeur de capacité de l'ordre de 20 % et l'antenne L1 est fabriquée avec une tolérance de l'ordre de 10 %. Ces tolérances sont incompatibles avec le respect des contraintes de précision d'accord. De même, de telles tolérances nuisent à l'adaptation d'impédance entre l'amplificateur 6 et le circuit oscillant.

Un ajustement manuel d'un condensateur C1 nécessite une intervention de maintenance une fois la borne mise en place dans son environnement définitif. De plus, on constate également des problèmes de maintenance liés à la dérive de l'adaptation d'impédance en fonction de modifications de l'environnement, par exemple, suite à des changements de température et/ou d'humidité.

### Résumé de l'invention

La présente invention vise à pallier les inconvénients des systèmes connus et, en particulier, à rendre l'adaptation d'impédance stable même en cas de variation de conditions environnementales de fonctionnement de la borne.

L'invention vise également à éviter un réglage manuel pour une adaptation d'impédance de l'antenne.

Pour atteindre ces objets ainsi que d'autres, la présente invention prévoit une borne de génération d'un champ électromagnétique, comprenant un circuit oscillant propre à recevoir une tension d'excitation alternative haute fréquence par l'intermédiaire d'un amplificateur et d'un coupleur directif, le circuit oscillant comportant au moins un élément de capacité variable, et un moyen pour modifier la valeur de cette capacité en fonction de l'amplitude d'un signal extrait du coupleur.

Selon un mode de réalisation de la présente invention, ledit moyen est constitué d'un comparateur de la tension extraite de la ligne couplée du coupleur par rapport à une tension de référence choisie pour maintenir l'impédance du circuit oscillant à une valeur prédéterminée.

Selon un mode de réalisation de la présente invention, le circuit oscillant est constitué d'un condensateur, en série avec une inductance et une résistance, l'élément de capacité variable comportant un transistor MOS, commandé par ledit moyen et connecté en parallèle avec l'association en série de l'inductance et de la résistance, la capacité parasite du transistor MOS servant à modifier la capacité du circuit oscillant.

Selon un mode de réalisation de la présente invention, ledit coupleur est à éléments localisés.

Selon un mode de réalisation de la présente invention, le champ électromagnétique téléalimente au moins un transpondeur.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente de façon très schématique, l'architecture classique d'une borne et d'un transpondeur auxquels s'applique la présente invention ;
la figure 2 représente partiellement un premier mode de réalisation d'un circuit d'adaptation d'impédance d'une borne selon la présente invention ; et
la figure 3 représente un deuxième mode de réalisation d'un circuit d'adaptation d'impédance selon l'invention.

### Description détaillée

Par souci de clarté, de mêmes éléments ont été désignés par de mêmes références aux différentes figures. De plus, seuls les éléments utiles à la compréhension de l'invention ont été représentés aux figures et seront décrits par la suite. En particulier, les circuits de commande et d'exploitation des données émises et reçues n'ont pas été détaillés et ne font pas l'objet de la présente invention. De plus, la structure d'un transpondeur n'a pas été détaillée, l'invention ne requérant aucune modification des transpondeurs classiques.

Une caractéristique de la présente invention est d'utiliser l'information fournie par un coupleur d'antenne, intercalé entre un amplificateur et le circuit oscillant d'une borne de lecture-écriture de transpondeur, pour asservir la valeur capacitive de ce circuit oscillant.

La figure 2 représente, de façon partielle et schématique, un premier mode de réalisation d'une borne 1' de lecture-écriture d'un transpondeur électromagnétique (non représenté) selon la présente invention. Seule une partie des constituants de la borne ont été représentés en figure 2, le reste étant similaire à la structure d'une borne classique telle qu'illustrée par la figure 1.

En figure 2, on retrouve un amplificateur 6 (LNA) de fourniture d'un signal d'excitation à un circuit oscillant 2' formé d'une résistance R1, d'une inductance L1 et d'un élément capacitif 20 en série, et un coupleur d'antenne directif 4 connecté entre la sortie de l'amplificateur 6 et le circuit oscillant 2'.

Selon l'invention, l'élément capacitif 20 est un élément à capacité variable et commandable par un signal CTRL. Ce signal CTRL est fourni par un circuit 21 (REG) dont le rôle est de comparer le signal fourni par le coupleur d'antenne 4 (borne CPLD) par rapport à une valeur de référence REF afin d'asservir la valeur de la capacité de l'élément 20 pour maintenir l'impédance du circuit oscillant 2' à une valeur prédéterminée. L'information fournie par le coupleur d'antenne 4 est par ailleurs toujours utilisée par un comparateur 9 d'asservissement du gain de l'amplificateur 6 afin de maintenir constante l'amplitude du signal d'excitation haute fréquence.

Lorsque l'impédance du circuit oscillant varie, par exemple sous l'effet de variations environnementales modifiant la capacité équivalente du circuit oscillant, l'amplitude du signal CPLD se trouve modifiée. Cette variation est détectée par le comparateur 21 (préférentiellement analogique) qui provoque une modification de la valeur de la capacité variable 20 dans un sens tel qu'il compense la perturbation de la capacité équivalente, la valeur REF étant choisie pour ramener l'amplitude du signal mesuré sur la borne CPLD vers une valeur nominale prédéterminée fonction de l'impédance voulue (par exemple 50 ohms), fixée par la valeur de la résistance R1 (majorée de la résistance série de l'inductance L1). Bien entendu, une autre valeur que 50 ohms peut être choisie en fonction de l'impédance de sortie du coupleur qui peut le cas échéant avoir un rapport d'impédances non unitaire entre la sortie et l'entrée.

Le choix de la valeur de référence REF du circuit 21 dépend des caractéristiques du coupleur et du circuit 21 lui-même, et sont à la portée de l'homme du métier.

Un avantage de ce mode de réalisation de la présente invention est que l'asservissement de l'impédance modifie la valeur de l'élément capacitif 20 dans le même sens que la variation requise pour un maintien de l'accord sur la fréquence de la porteuse de téléalimentation. En d'autres termes, on asservit l'impédance en même temps que l'accord.

La figure 3 représente un deuxième mode de réalisation d'un circuit d'asservissement selon l'invention. Dans cet exemple, le circuit 21 fournissant le signal de commande CTRL commande un transistor MOS 22 monté en parallèle sur une association en série de l'inductance L1 avec la résistance R1. Le condensateur C1 étant, par exemple, entre ce montage en parallèle et la sortie DIR du coupleur 4 (en variante, entre ce montage parallèle et la masse si cela est compatible avec la commande de l'interrupteur 22). Dans cet exemple, les positions respectives du condensateur C1 et de l'inductance L1 ont été inversées par rapport aux figures 1 et 2. Cela n'a toutefois aucune incidence sur le fonctionnement.

De préférence, le signal reçu Rx est prélevé sur la sortie CPLD du coupleur, ce qui améliore le rapport signal/bruit. Une telle connexion est également possible dans le mode de réalisation de la figure 2. La seule précaution est que la constante de temps de la boucle de régulation soit nettement supérieure (au moins dix fois) à la période de rétromodulation de façon à ne pas perdre l'information de rétromodulation.

Selon le mode de réalisation de la figure 3, la résistance R1 est en série avec l'inductance L1 entre le point 24 d'interconnexion avec le transistor 22 et la masse. La capacité parasite du transistor MOS 22 se trouve en parallèle avec l'association en série L1-R1 et est utilisée pour modifier l'impédance du circuit oscillant 2'.

Selon une variante, un condensateur supplémentaire relie le point milieu 24 à la masse.

Un avantage du mode de réalisation de la figure 3 est qu'il permet de modifier le facteur de qualité Qs (Qs = ωL1/(Rs+R1), où Rs désigne la résistance série de l'inductance L1 et où ω désigne la pulsation à l'accord) indépendamment de l'adaptation d'impédance. On peut, par exemple, rendre la résistance R1 variable pour adapter le facteur de qualité en fonction de la résistance Rs.

Un avantage de la présente invention est qu'elle permet d'adapter automatiquement l'impédance d'un circuit oscillant en fonction de son environnement.

Un autre avantage de la présente invention est qu'elle évite un réglage manuel de ses constituants à des fins d'adaptation d'impédance ou d'accord.

Un autre avantage de la présente invention est que cet asservissement ne nuit pas au reste du fonctionnement de la borne. A l'inverse, cela améliore la capacité de son circuit de démodulation 8.

Bien entendu, la présente invention est susceptible de diverses variantes et modifications qui apparaîtront à l'homme de l'art. En particulier, le choix de la valeur de référence sur laquelle asservir la tension dérivée du coupleur 4 dépend de l'application et notamment, des paramètres du coupleur lui-même.

## Revendications

1. Borne (1') de génération d'un champ électromagnétique, comprenant un circuit oscillant (C1, L1, R1) propre à recevoir une tension d'excitation alternative haute fréquence par l'intermédiaire d'un amplificateur (6) et d'un coupleur directif (4), **caractérisée en ce que** le circuit oscillant comporte au moins un élément (20, 22) de capacité variable, et **en ce que** la borne comporte, pour modifier la valeur de cette capacité en fonction de l'amplitude d'un signal extrait du coupleur (4), un comparateur (21) de la tension extraite de la ligne couplée du coupleur par rapport à une tension de référence (REF) choisie pour maintenir l'impédance du circuit oscillant à une valeur prédéterminée.

2. Borne selon la revendication 1, dans laquelle le circuit oscillant est constitué d'un condensateur (C1), en série avec une inductance (L1) et une résistance (R1), l'élément de capacité variable comportant un transistor MOS (22) commandé par ledit moyen (21) et connecté en parallèle avec l'association en série de l'inductance et de la résistance, la capacité parasite du transistor MOS servant à modifier la capacité du circuit oscillant.

3. Borne selon la revendication 1, dans laquelle ledit coupleur (4) est à éléments localisés.

4. Borne selon la revendication 1, dans laquelle le champ électromagnétique téléalimente au moins un transpondeur (10).
